# EUROPÄISCHE PATENTSCHRIFT

(11) **EP 1 900 884 B1**
(45) Veröffentlichungstag und Bekanntmachung des Hinweises auf die Patenterteilung: **13.08.2008**
(21) Anmeldenummer: 06015011.7
(22) Anmeldetag: 19.07.2006
(51) Int. Cl.: E04B 1/78, E04B 1/80

(54) **Holzweichfaserplatte für die raumseitige Dämmung**
Soft woodfibre panel for internal insulation
Panneau de fibres douces en bois pour l'isolation interne

(43) Veröffentlichungstag der Anmeldung: 19.03.2008
(73) Patentinhaber: Pavatex SA, 1701 Fribourg (CH)
(72) Erfinder: Brombacher, Volker, 5644 Auw (CH); Bartlomé, Olin, 7435 Splügen (CH)
(74) Vertreter: Blum, Rudolf Emil

(56) Entgegenhaltungen:
- EP-A1- 1 247 916
- EP-A2- 0 353 540
- DE-U- 7 321 823

## Beschreibung

Die vorliegende Erfindung betrifft eine Holzweichfaserplatte für die raumseitige Dämmung, insbesondere für die Feuchtigkeitsregulierung.

Holzweichfaserplatten sind ein traditionelles Dämmmaterial für die raumseitige Dämmung und haben sich seit vielen Jahrzehnten in der Praxis bewährt und wurden ständig weiter entwickelt. So beschreibt EP1247916 Dämmplatten, die auf der Basis von mit Wasserglas verklebten Faserplatten bestehen. Diese Dämmplatten weisen eine vordere und hintere Oberfläche aufmit denen die Dämmplatte beginnt bzw. endet wobei die Fasern eine Vorzugsrichtung quer zeigen, die quer zur Ebene der vorderen und hinteren. Oberfläche verlaufen. Diese Struktur verbessert die Abreisfähigheit der Dämmplatten. Ferner beschreibt DE7321823 ein plattenförmiges Branschutz-Bauelement, mit mindestens einer wasserglashaltigen Schicht. Diese Schicht ist zwischen zwei Grundplatten und einem Rahmen angeordnet.

Die Einsatzgebiete von Holzweichfaserplatten reichen von der Sanierung von schwach gedämmten Gebäuden, mit damit einhergehender Erhöhung des Wohnkomforts und Senkung der Energiekosten, bis zur Wertsteigerung historischer und denkmalgeschützter Gebäude. Neben Holzweichfaserplatten werden für die raumseitige Dämmung von Gebäudehüllen sowohl mineralische Dämmstoffe, wie Glaswolle und Steinwolle, als auch zellulosehaltige Faserdämmstoffe aus Hanf, Flachs etc. erfolgreich und in grossen Mengen eingesetzt und haben je nach Anwendungsfall ihre spezifischen Vorteile aber auch Nachteile. Diese Vor-'und Nachteile beziehen sich vor allem auf
- hygroskopische Eigenschaften,
- Feuchteverteilung,
- Ökologie,
- Kosten,
- Dampfdiffusionsoffenheit und
- Brandschutz.

Das hat dazu geführt, dass diese Dämmstoffe hinsichtlich der konkreten Anwendung teilweise im Wettbewerb zueinander stehen und der Anwender nach verschiedenen Kriterien, wie Budget, bauphysikalischen Berechnungs-Simulationen oder auch Philosophie entscheidet, welches Dämmmaterial er einsetzten möchte. Zur Realisierung von für den Anwender massgeschneiderten Lösungen werden immer wieder neue Kombinationen von bekannten aber auch von zum Teil neuen Baustoffen für die Innendämmung gewählt.

Speziell solche Themen wie Kondenswasserbildung im Bauteil bei der Sanierung alter und historischer Gebäude mit erhaltenswerten Fassaden verunsichern weiterhin Bauphysiker, Investoren und Kulturbeauftragte und haben zum Teil Umdenkungsprozesse eingeleitet.

Unsachgemässe Innendämmung kann zu einem bedenklichen Zustand der bestehenden und gegebenenfalls historischen Gebäudehülle führen. Der Einsatz üblicher, dampfsperrender Innendämmsysteme ist risikoreich, fehleranfällig und oft für historische Bauwerke ungeeignet. So versucht man bis heute mit konventionellen Mitteln wie Dampfsperren oder Dampf sperrenden Dämmstoffen die Feuchtezufuhr infolge Diffusion und Konvektion in die Kondensationsebene zu verhindern. Infolge der Sperrwirkung, kann sich an der Sperrschicht selbst Kondenswasser bilden, was an einbindenden Deckenbalken oder Zwischenwandanschlüssen zu Problemen führen kann, weshalb Durchfeuchtungen und mechanische Degradation häufige Schadensbilder in alten Bauteilen sind.

Durch die Verwendung von Dämmmaterial, das hygroskopisch aktiv, sowie kapillar leitfähig ist, kann einer zerstörenden Kondensatbildung vorgebeugt werden. Dabei wirken die Zellulosefasern und Faserhohlräume als Feuchtepuffer bei Feuchtespitzen in der Innenraumluft und tragen so zur Regulierung des Innenklimas bei. Zudem sorgt die Kapillaraktivität der Zellulosefasern für eine vorteilhafte, schnelle und grossflächige Verteilung der hygroskopisch aufgenommenen Feuchte in der Dämmung und damit auch zu einer homogeneren, d.h. über eine grosse Fläche verteilte, Feuchtigkeitsabgabe.

Infolge der kapillaren Leitfähigkeit bleibt die Feuchte im Faserverbund nicht an einer kalten Stelle, an welcher der Taupunkt erreicht wird, sitzen, wie dies bei den heute zugelassenen mineralischen Fasern der Fall ist, die derart sein müssen, dass sie nicht kanzerogen sind, sondern verteilt sich kapillar im Medium und verdunstet dann an der Oberfläche zurück in den Innenraum.

Bei grossen Temperaturdifferenzen, wie sie bei hoher Innen- und tiefer Aussentemperatur resultieren, und bei den damit verbundenen sehr hohen Unterschieden in der relativen Feuchte, kann aber eine kurzzeitige Kondensation an einer kalten Stelle nicht mit vollständiger Sicherheit ausgeschlossen werden. Es ist deshalb wünschenswert, ein Dämmmaterial zu haben, das Frostschäden, insbesondere am Mauerwerk, mit grösserer Sicherheit zu vermeiden hilft.

Ziel der vorliegenden Erfindung war es deshalb, ein solches Dämmmaterial zur Verfügung zu stellen.

Dieses Ziel wurde erreicht durch Bereitstellen eines Dämmmaterial gemäss Anspruch 1. Spezielle Ausführungsformen können den abhängigen Ansprüchen entnommen werden.

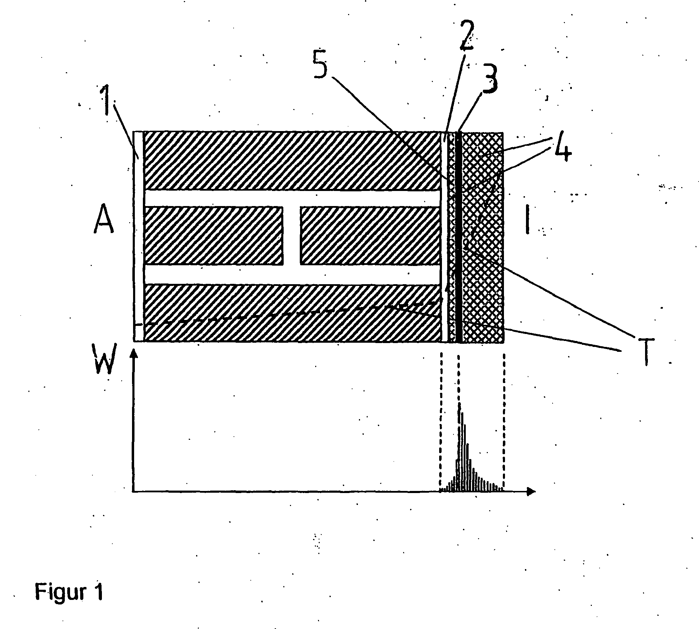

Figur 1 zeigt schematisch den Temperaturverlauf (T) und Feuchtigkeitsverlauf (Wassergehalt W) in einem erfindungsgemässen Dämmmaterial bei Anwendung. Dabei bedeuten: A Aussen, I Innen, 1 Verputz, 2 Ausgleichsputz (vorzugsweise kapillar leitfähig), 3 Funktionsschicht, 4 diffusionsoffene, kapillar aktive Innendämmung, 5 Kondensatebene, welche auf der kalten Seite der Dämmung liegt. Die schnelle Rückverteilung des Wassedampf-Kondensates durch Kappilarkräfte wird aus dem unteren Graphen deutlich

Im Rahmen der vorliegenden Erfindung wurde gefunden, dass sich - damit Frostschäden bei einer kapillaraktiven und hygroskopischen Innendämmung vermieden werden - die potentielle Kondensationsebene nicht zwischen dem Dämmmaterial und der bestehenden Wand befinden darf und dass es zur Vermeidung von Frostschäden eine Schicht braucht, an welcher der Wasserdampf vor dem historischen Bauteil, resp. vor Erreichen des Taupunkts abgebremst wird.

Erfindungsgemäss wurde nun gefunden, dass speziell gute Ergebnisse erzielt werden, wenn eine solche Wasserdampf abbremsende Schicht (Funktionsschicht) zwischen zwei Holzweichfaserplatten angeordnet wird. Diese Holzweichfaserplatten dienen, wie bereits oben dargelegt der kapillaren Verteilung und Zurückführung der Feuchtigkeit, sie lassen sich aber auch mauerseitig gut auf dem Mauerwerk befestigen und raumseitig gut mit einer ästhetisch ansprechenden Beschichtung (Verputz und gegebenenfalls darauf applizierter Farbe) versehen.

Dämmmaterial muss so ausgelegt sein, dass es zu einer gemässigten Akkumulierung der Wassermoleküle im Bereich des Dämmmaterials, insbesondere an der Funktionsschicht, kommt. Durch die kapillare Leitfähigkeit der Holzfasern, welche sich durch die erhöhte Feuchte zusätzlich steigert, wird diese Feuchte in einer kapillaraktiven und hygroskopischen Dämmung umgehend rückverteilt und schliesslich an den Raum zurückgegeben. Für die kapillare Leitfähigkeit von kapillar-aktivem Material, wie Holzweichfaserplatten, gilt allgemein, dass F_{Kap} ≥ F_{Dampf} (F_{Kap} = Kapillarkraft; F_{Dampf} = Dampfdruck) wird, wenn der Feuchteanteil im kapillar-aktiven Material steigt, d.h. die kapillare Leitfähigkeit ist am höchsten wenn das Material komplett nass ist. Dann kann ein Kräfteverhältnis von bis zu ca. 1 : 1 000 000 erreicht werden. Bei Anwendung wird allgemein von einer raumseitigen Luftfeuchtigkeit von üblicherweise maximal 60 % relativer Feuchtigkeit ausgegangen.

Vorteil des erfindungsgemässen Dämmmaterials ist, dass es den aufgrund der bestehenden Temperaturdifferenz zwischen Innen- und Aussenwand üblicherweise nach aussen diffundierenden Wasserdampf an der mineralisch gefüllten Wasserglasschicht, die ökologisch unbedenklich ist, abbremst. Die Wasserdampfmoleküle werden dort im Porenraum der Holzfasern akkumuliert, und durch die Fähigkeit der Holzfasern, Wasser mittels Kapillarkräften, die nach dem Raum zu gerichtet sind, in den Poren des Dämmmaterials zu leiten, wird ein Teil der Feuchte zurück an die Oberfläche transportiert, von wo aus das Wasser in den Raum zurückverdunstet.

Vorteilhafterweise wird für die im Rahmen dieser Erfindung eingesetzten Holzweichfaserplatten zur Erhöhung der Feuchtigkeitsspeicherkapazität und zur Verbesserung des kapillaren Transports auf eine Behandlung mit sonst bei Holzfaserinnendämmungen üblichen Hydrophobierungsmitteln verzichtet. Dieser Verzicht führt zu signifikant erhöhter Benetzung der Fasern und somit zu erhöhter kapillarer Leitfähigkeit.

Die sandwichartig aufgebauten Dämmmaterialien können symmetrisch oder asymmetrisch aufgebaut sein. Bei einem asymmetrisch aufgebautem Holzweichfaserplatten-Sandwich befindet sich das grössere kapillaraktive Holzfaservolumen vor der mineralisch gefüllten Wasserglasschicht, d.h. auf der Raumseite der Innenraumdämmung. Demzufolge kann eine grössere Menge des anfallenden Wasserdampfes hygroskopisch gespeichert und rückverteilt werden. Übliche Abmessungen der Holzweichfaserplatten sind: Mauerseitig ca. 20 mm oder gegebenenfalls weniger, raumseitig ca. 20 mm oder mehr, insbesondere 20 bis 80 mm oder mehr.

Aufgrund der kapillaraktiven Eigenschaften der Holzweichfaserplatten ist es bevorzugt, das grössere Dämmvolumen raumseitig zu haben. Das mauerseitige Dämmvolumen dient primär dem Schutz der eher spröden Wasserglasschicht, der verbesserten Stapelbarkeit und Handhabung und - aufgrund der Weichheit resp. Verformbarkeit - dem besseren Anschliessen der Dämmung an Unebenheiten aufweisende Mauern.

Die Funktionsschicht besteht aus einer mineralisch gefüllten Wasserglasschicht. Bevorzugt wird ein Wasserglas mit einem Molverhältnis von SiO₂ : Na₂O von 3.2 bis 2.6 eingesetzt.

Die Viskosität und das Diffusionsverhalten von Wasserdampf können durch die Beimischung von Füllstoffen, insbesondere mineralischen Füllstoffen, z.B. als "Steinbruch" bekannte Alkalisilikate, beeinflusst werden. Als "Steinbruch" bezeichnet werden Alkalisilikate, die in der.Natur abgebaut und lediglich gemahlen werden, im Unterschied zu chemisch gefällten Alkalisilikaten.

Das eingesetzte mineralisch gefüllte Wasserglas hat einen Wasserglasanteil von 25 bis 60 Gew.-%, insbesondere von 25 bis 55 Gew.-%, und einen Füllstoffanteil derart, dass die Gesamtzusammensetzung eine Viskosität von 700 bis 1300 mPas aufweist. Dies wird üblicherweise mit Gehalten an mineralischen Füllstoffen von bis. ca. 35 Gew.-%, insbesondere bis ca. 30 Gew.-%, bezogen auf das wasserhaltige Wasserglas erreicht. Höhere Füllstoffgehalte wären bevorzugt, lassen sich aber aufgrund der erhöhten Viskosität schlecht bis gar nicht verarbeiten. Üblicherweise weist die Wasserglasschicht einen mineralsichen Füllstoffgehalt von bis zu ca. 60 Gew.-%, insbesondere bis zu ca. 56 Gew.-%, bezogen auf den Gesamtfeststoffgehalt der Wasserglas-Suspension, resp. nach Trocknung in der fertigen Funktionsschicht, eines mineralischen Füllstoffs auf, insbesondere ca. 55.5 Gew.-%. Hoch mit mineralischen Füllstoffen gefülltes Wasserglas ist speziell bevorzugt. Ebenfalls bevorzugt ist das Wasserglas ein Wasserglas mit geringer Schrumpfung bei Trocknung.

Neben den mineralischen Füllstoffen können auch organische Füllstoffe vorhanden sein. Diese dienen beispielsweise der Steuerung des Trocknungsverhaltens und werden in der wässrigen Wasserglas-Suspension in Mengen von bis zu ca. 5 Gew.-%, insbesondere in Mengen von bis zu ca. 4 Gew.-%, insbesondere in Mengen von ca. 4 Gew.-% eingesetzt, resp. - bezogen auf den Gesamtfeststoffgehalt resp. die ausgehärtete Schicht - in Mengen von bis zu ca. 8 Gew.-%, insbesondere in Mengen von bis ca. 7.5 Gew.-%, vorzugsweise 7-7.5 Gew.-%.

Das Silikat macht üblicherweise bis zu 40 Gew.-% des Gesamtfeststoffgehalts des Wasserglases aus, insbesondere ca. 37 Gew.-%.

Das gefüllte Wasserglas hat üblicherweise eine Viskosität von 700 bis 1300 mPas, insbesondere ca. 1000 mPas, und wird flächendeckend in einer Menge von 0.1 bis 1 kg m⁻² aufgetragen, vorzugsweise in einer Menge von ca. 0.5 kg m⁻² bei einer Viskosität von ca. 1000 mPas.

Das gefüllte Wasserglas wirkt als Kopplungsschicht für die anliegenden Faserplatten und bewirkt zudem eine Reduzierung der Wasserdampfdiffusion durch das Holzweichfaserplatten-Dämmmaterial. Diese Wasserdampfdiffusion ist bedingt durch den Unterschied in den Partialdrucken, welcher durch die Temperaturdifferenz zwischen Innen- und Aussenwand entsteht.

Ein erfindungsgemässes Dämmmaterial kann hergestellt werden, indem eine nach bekannten Verfahren (siehe z.B Ullmanns Encyclopädie der technischen Chemie, 4. Auflage, Weinheim, New York, 1976, Band 12, Seite 720ff.) hergestellte, vorzugsweise nicht hydrophobierte Holzweichfaserplatte einseitig mit einem mineralisch gefüllten Wasserglas flächendeckend behandelt wird, worauf vor Trocknung der Schicht eine zweite Holzweichfaserplatte auf die mit Wasserglas behandelte Seite der ersten Holzweichfaserplatte aufgebracht wird. Die derart hergestellten Sandwichstrukturen können gestapelt werden, so dass sich der Verbund, assistiert durch den Stapeldruck, ausbildet. Vorzugsweise werden Holzweichfaserplatten mit sehr geringem Wassergehalt (z.B. ca. 4 Gew.-% direkt ab Produktion) verwendet, da der geringe Wassergehalt die Aushärtung des Wasserglases infolge von Wasseradsorption fördert.

Ein erfindungsgemässes Dämmmaterial kann raumseitig auf eine Mauer aufgebracht werden, insbesondere mechanisch, z.B. mittels Tellerdübeln.

Auf der dem Raum zugewandten Seite kann ein erfindungsgemässes Dämmmaterial mit einer Beschichtung (z.B. einem Verputz und gegebenenfalls darauf applizierter Farbe) versehen werden.

### Beispiel:

Es wurde ein Holzweichfaserplatten-Sandwich hergestellt mit den folgenden Dimensionen:

| | |
|---|---|
| Dicke der raumseitigen Platte variabel, insbesondere | 20 mm, 40 mm, 60 mm, 80 mm |
| Dicke der mauerseitigen Platte | 20 mm |
| Viskosität des Wasserglases: | 1000 mPas |
| Menge Wasserglas | 500 g m⁻² |

Um die Benetzung der Fasern signifikant zu verbessern und damit die kapillare Leitfähigkeit zu erhöhen, wurde auf eine Behandlung mit sonst bei Holzfaserinnendämmungen üblichen Hydrophobierungsmitteln verzichtet. Die Herstellung der Holzweichfaserplatten erfolgte ansonsten nach gängigen Verfahren (siehe z.B Ullmanns Encyclopädie der technischen Chemie, 4. Auflage, Weinheim, New York, 1976, Band 12, Seite 720ff.).

Bei der Herstellung des Sandwich wurde mineralisch gefülltes Natrium-Wasserglas mit
- einer Rohdichte von 1.52 g/cm³,
- einem Gesamtfeststoffgehalt von 55 Gew.-%,
- einem mineralischen Füllstoffgehalt von 30 Gew.-%,
- einem organischen Füllstoffgehalt von 4 Gew.-% und
- einer Viskosität von 1000 mPas
auf die eine (dünnere) der Holzweichfaserplatten gegeben, worauf vor Trocknung der Wasserglasschicht die zweite Holzweichfaserplatte aufgebracht wurde.

Die Trocknung der Sandwichplatten erfolgte gestapelt, ohne Wärmezufuhr.

Soweit dieses Dämmmaterial ein asymmetrisch aufgebautes Holzweichfaserplatten-Sandwich war, wurde dieses derart auf eine Wand aufgebracht, dass sich das grössere kapillaraktive Holzfaservolumen raumseitig der mineralisch gefüllten Wasserglasschicht befand, so dass das Material eine grössere Menge des anfallenden Wasserdampfes hygroskopisch speichern und rückverteilen konnte.

In Figur 1 ist das Wirkprinzip der erfindungsgemässen kapillaraktiven Innendämmung gezeigt.

Die Bezugszeichnen haben folgende Bedeutung:
1. Verputz
2. Ausgleichsputz, vorzugsweise kapillar leitfähig
3. Funktionsschicht
4. Diffusionsoffene kapillaraktive Innendämmung
5. Kondensatebene liegt auf der katten Seite der Dämmung

A. Aussen
I. Innen
W. Wassergehalt
T. Temperaturverlauf
Die untere Grafik zeigt die schnelle Rückverteilung des Wasserdampf Kondensats durch Kapillarkräfte.

Die Platte gemäss Beispiel ergab die folgenden konkreten Messwerte (gemessen nach EN 12086:1997):

| Gesamtdicke | S (früher S_{d}) [m] |
|---|---|
| 40 mm | 0.65 |
| 60 mm | 0.75 |
| 80 mm | 0.85 |
| 100 mm | 0.95 |

## Patentansprüche

1. Dämmmaterial für die raumseitige Dämmung, **dadurch gekennzeichnet, dass** es eine Wasserglasschicht aus mineralisch gefülltem Wasserglas zwischen zwei Holzweichfaserplatten umfasst.

2. Dämmmaterial gemäss Anspruch 1, **dadurch gekennzeichnet, dass** die Wasserglasschicht bis ca. 60 Gew.-% bezogen auf den Gesamtfeststoffgehalt der Wasserglas-Schicht eines mineralischen Füllstoffs enthält, insbesondere bis ca. 56 Gew.-%, speziell bevorzugt ca. 55.5 Gew.-%.

3. Dämmmaterial gemäss einem der vorangehenden Ansprüche, **dadurch gekennzeichnet, dass** die Wasserglasschicht bezogen auf den Gesamtfeststoffgehalt bis 40 Gew.-% Silikat enthält, insbesondere ca. 37 Gew.- %.

4. Dämmmaterial gemäss einem der vorangehenden Ansprüche, **dadurch gekennzeichnet, dass** das Silikat der Wasserglasschicht ein Natriumsilikat mit einem Molverhältnis von SiO₂ : Na₂O von 3.2 bis 2.6 ist.

5. Dämmmaterial gemäss einem der vorangehenden Ansprüche, **dadurch gekennzeichnet, dass** die Wasserglasschicht organische Füllstoffe in Mengen bezogen auf den Gesamtfeststoffgehalt von bis zu max. 8 Gew.-% enthält, insbesondere in Mengen bis ca. 7.5 Gew.-%, speziell bevorzugt im Bereich von 7 bis 7.5 Gew.-%.

6. Dämmmaterial gemäss einem der vorangehenden Ansprüche, **dadurch gekennzeichnet, dass** die Holzweichfaserplatten nicht hydrophobierte Holzweichfaserplatten sind.

7. Dämmmaterial gemäss einem der vorangehenden Ansprüche, **dadurch gekennzeichnet, dass** das mineralisch gefüllte Wasserglas als Kopplungsschicht der anliegenden Faserplatten dient.

8. Dämmmaterial gemäss einem der vorangehenden Ansprüche, **dadurch gekennzeichnet, dass** es asymmetrisch aufgebaut ist.

9. Dämmmaterial gemäss Anspruch 8, **dadurch gekennzeichnet, dass** die Abmessungen für die mauerseitige Holzweichfaserplatte weniger als 20 mm und für die raumseitige Holzweichfaserplatte 20 mm oder mehr betragen.

10. Verfahren zur Herstellung eines Dämmmaterials-gemäss einem der vorangehenden Ansprüche, **dadurch gekennzeichnet, dass** zwei Holzweichfaserplatten bereitgestellt werden, dass eine Wasserglasschicht aus mineralisch gefülltem Wasserglas flächendeckend auf eine der Holzweichfaserplatten aufgebracht und dass vor der Trocknung der Wasserglasschicht die zweite Holzweichfaserplatte darauf aufgebracht wird.

11. Verfahren gemäss Anspruch 10, **dadurch gekennzeichnet, dass** die mineralisch gefüllte Wasserglasschicht flächendeckend in einer Menge zwischen 0.1 bis 1 kg m⁻² vorhanden ist, bei einer Viskosität von 700 bis 1300 mPas.

12. Verfahren gemäss Anspruch 11, **dadurch gekennzeichnet, dass** die Wasserglasschicht flächendeckend in einer Menge von ca. 0.5 kg m⁻² bei einer Viskosität von ca. 1000 mPas aufgebracht wird.

13. Verwendung eines Dämmmaterials gemäss einem der Ansprüche 1 bis 9 zur raumseitigen Dämmung einer Aussenmauer.

## Claims

1. An insulating material for internal room insulation, **characterised in that** it comprises a waterglass layer of mineral-filled waterglass between two soft wood fibre boards.

2. An insulating material according to Claim 1, **characterised in that** the waterglass layer contains up to approximately 60% by weight, relative to the total solids content of the waterglass layer, of a mineral filler, in particular up to approximately 56% by weight, especially preferably approximately 55.5% by weight.

3. An insulating material according to one of the preceding claims, **characterised in that** the waterglass layer, relative to the total solids content, contains up to 40% by weight silicate, in particular approximately 37% by weight.

4. An insulating material according to one of the preceding claims, **characterised in that** the silicate of the waterglass layer is a sodium silicate having a molar ratio of SiO₂: Na₂O of 3.2 to 2.6.

5. An insulating material according to one of the preceding claims, **characterised in that** the waterglass layer contains organic fillers in amounts relative to the total solids content of up to a maximum of 8% by weight, in particular in amounts of up to approximately 7.5% by weight, especially preferably in the range from 7 to 7.5% by weight.

6. An insulating material according to one of the preceding claims, **characterised in that** the soft wood fibre boards are non-hydrophobised soft wood fibre boards.

7. An insulating material according to one of the preceding claims, **characterised in that** the mineral-filled waterglass serves as a coupling layer for the adjoining fibre boards.

8. An insulating material according to one of the preceding claims, **characterised in that** it is asymmetrically constructed.

9. An insulating material according to Claim 8, **characterised in that** the dimension for the wall-side soft wood fibre board is less than 20 mm and the dimension for the room-side soft wood fibre board is 20 mm or more.

10. A method for producing an insulating material according to one of the preceding claims, **characterised in that** two soft wood fibre boards are provided, that a waterglass layer of mineral-filled waterglass is applied covering the surface of one of the soft wood fibre boards and that the second soft wood fibre board is applied thereto before the waterglass layer dries.

11. A method according to Claim 10, **characterised in that** the mineral-filled waterglass layer is present covering the surface in an amount of between 0.1 and 1 kg m⁻², with a viscosity of approximately 700 to 1300 mPas.

12. A method according to Claim 11, **characterised in that** the waterglass layer is applied covering the surface in an amount of approximately 0.5 kg m⁻², with a viscosity of approximately 1000 mPas.

13. Use of an insulating material according to one of Claims 1 to 9 for internal insulation of an external wall.

## Revendications

1. Matériau isolant pour l'isolation interne, **caractérisé en ce qu'**il comprend une couche de verre soluble en verre soluble à charge minérale entre deux panneaux de fibres de bois douces.

2. Matériau isolant selon la revendication 1, **caractérisé en ce que** la couche de verre soluble contient jusqu'environ 60 % en poids, rapportés à la teneur totale en matières solides de la couche de verre soluble, d'une charge minérale, en particulier jusqu'environ 56 % en poids, et de préférence encore environ 55,5 % en poids.

3. Matériau isolant selon l'une quelconque des revendications précédentes, **caractérisé en ce que** la couche de verre soluble contient, rapportés à la teneur totale en matières solides, jusqu'environ 40 % en poids de silicate, en particulier environ 37 % en poids.

4. Matériau isolant selon l'une quelconque des revendications précédentes, **caractérisé en ce que** le silicate de la couche de verre soluble est un silicate de sodium avec un rapport molaire de SiO₂ : Na₂O de 3,2 à 2,6.

5. Matériau isolant selon l'une quelconque des revendications précédentes, **caractérisé en ce que** la couche de verre soluble contient des charges organiques en des quantités, rapportées à la teneur totale en matières solides, allant jusqu'à 8 % en poids maximum, en particulier en des quantités allant jusqu'à 7,5 % en poids, et de préférence encore dans la plage de 7 à 7,5 % en poids.

6. Matériau isolant selon l'une quelconque des revendications précédentes, **caractérisé en ce que** les panneaux en fibres de bois douces ne sont pas des panneaux hydrophobes en fibres de bois douces.

7. Matériau isolant selon l'une quelconque des revendications précédentes, **caractérisé en ce que** le verre soluble à charge minérale sert de couche de couplage des panneaux de fibres adjacents.

8. Matériau isolant selon l'une quelconque des revendications précédentes, **caractérisé en ce qu'**il présente une structure asymétrique.

9. Matériau isolant selon la revendication 8, **caractérisé en ce que** les dimensions pour le panneau de fibres de bois douces côté mur sont inférieures à 20 mm et pour le panneau de fibres de bois douces côté local sont égales ou supérieures à 20 mm.

10. Procédé pour la fabrication d'un matériau isolant selon l'une quelconque des revendications précédentes, **caractérisé en ce que** l'on prépare deux panneaux de fibres de bois douces, **en ce que** l'on dépose une couche de verre soluble en verre soluble à charge minérale en recouvrant la surface sur un des panneaux de fibres de bois douces et **en ce que** l'on dépose sur celui-ci le deuxième panneau de fibre de bois douces avant le séchage de la couche de verre soluble.

11. Procédé selon la revendication 10, **caractérisé en ce que** la couche de verre soluble à charge minérale, qui recouvre la surface, est présente en une quantité comprise entre 0,1 et 1 kg/m², avec une viscosité de 700 à 1300 mPas.

12. Procédé selon la revendication 11, **caractérisé en ce que** la couche de verre soluble recouvrant la surface est déposée en une quantité d'environ 0,5 kg/m² avec une viscosité d'environ 1000 mPas.

13. Utilisation d'un matériau isolant selon l'une quelconque des revendications 1 à 9 pour l'isolation interne d'un mur extérieur.
